# EUROPÄISCHE PATENTSCHRIFT

(11) **EP 2 493 647 B1**
(45) Veröffentlichungstag und Bekanntmachung des Hinweises auf die Patenterteilung: **11.12.2013**
(21) Anmeldenummer: 10775772.6
(22) Anmeldetag: 27.10.2010
(51) Int. Cl.: B23B 29/034, B23Q 17/22

(54) **FEINDREHWERKZEUG**
FINE TURNING TOOL
OUTIL DE TOURNAGE PRÉCIS

(30) Priorität: 29.10.2009 DE 102009051843
(43) Veröffentlichungstag der Anmeldung: 05.09.2012
(73) Patentinhaber: Wohlhaupter GmbH, 72636 Frickenhausen (DE)
(72) Erfinder: BUCK, Günter, 72584 Hülben (DE)
(74) Vertreter: Hoeger, Stellrecht & Partner Patentanwälte
(86) Internationale Anmeldenummer: PCT/EP2010/066284
(87) Internationale Veröffentlichungsnummer: WO 2011/051355

(56) Entgegenhaltungen:
- EP-A2- 1 716 950
- EP-B1- 0 804 984
- WO-A1-91/03345
- DE-A1-102007 004 383
- DE-C2- 4 242 063
- JP-A- 1 171 707
- "ADVERTISEMENT", MACHINES PRODUCTION, SOFETEC. BOULOGNE/SEINE, FR, Nr. 546, 12. Dezember 1990 (1990-12-12), Seite 89,91, XP000169111, ISSN: 0047-536X

## Beschreibung

Die Erfindung betrifft ein Feindrehwerkzeug mit den Merkmalen des Oberbegriffes von Patentanspruch 1.

Derartige Feindrehwerkzeuge sind aus der DE 42 42 063 C2 und der EP 0 804 984 B1 bekannt. Mit ihrer Hilfe werden hauptsächlich eng tolerierte Bohrungen bearbeitet. Sie sind dazu in die Spindel einer Werkzeugmaschine einspannbar. Mittels einer Schneidplatte, die an dem Schneidplattenträger festgelegt wird, kann die Bohrung spanabhebend bearbeitet werden. Zur Einstellung des gewünschten Ausdreh- oder Ausbohrradius kann der Werkzeugschlitten bezogen auf die Drehachse des Werkzeugkörpers radial verstellt werden. Der Ausgleichsschlitten, der über den Übertragungsmechanismus mit dem Werkzeugschlitten gekoppelt ist, führt bei einer Verstellung des Werkzeugschlittens eine gegenläufige Bewegung aus, so dass sich aufgrund der Relativbewegung der beiden Schlitten die jeweiligen Massen so verlagern, dass das Feindrehwerkzeug insgesamt ausgewuchtet ist.

Die Verstellung des Werkzeugschlittens erfolgt bei dem aus der DE 42 42 063 C2 bekannten Feinwerkzeug über den Übertragungsmechanismus durch Verschieben des Ausgleichsschlittens mit Hilfe einer Mikrometerschraube. Der Ausgleichsschlitten bildet somit den Antrieb aus für die Verstellung des Werkzeugschlittens.

Bei dem aus der EP 0 804 984 B1 bekannten Feindrehwerkzeug wird der Werkzeugschlitten direkt verstellt mit Hilfe eines Feinverstellmechanismus, der eine Zustellschraube umfasst.

Ein ähnlich ausgestaltetes Feindrehwerkzeug ist aus der DE 10 2007 004 383 A1 bekannt. Zum Festklemmen des Werkzeugschlittens und des Ausgleichsschlittens kommt bei diesem Feindrehwerkzeug eine Klemmeinrichtung zum Einsatz, mit deren Hilfe der Werkzeugkörper elastisch verformt werden kann, so dass der Werkzeugschlitten und der Ausgleichsschlitten in ihren Bohrungen eingeklemmt werden.

Die Verstellung des Werkzeugschlittens kann bei den bekannten Feindrehwerkzeugen an einer Skala mit einem Nonius abgelesen werden. Das Ablesen der Skala erfordert allerdings einige Übung.

Es sind auch Feindrehwerkzeuge bekannt, bei denen die radiale Verstellung eines Werkzeugschlittens an einer digitalen Anzeige abgelesen werden kann. Allerdings ermöglichen derartige Feindrehwerkzeuge bisher nur eine seitliche Montage des Schneidplattenträgers an der einem Schaft des Werkzeugkörpers abgewandten Längsseite des Werkzeugschlittens. Dies wiederum hat zur Folge, dass der Ausdreh- oder Ausbohrradius nur geringfügig verstellt werden kann. Der vom Werkzeugschlitten erzielbare Hub ist sehr beschränkt.

Aus der WO 91/03345 A1 ist ein Werkzeugkopf für den Einsatz in Werkzeugmaschinen bekannt mit einem relativ zum rotierenden Grundkörper des Werkzeugkopfs quer zur Drehachse verstellbaren mit mindestens einem Schneidwerkzeug bestückbaren Schieber. Weiter ist eine Einrichtung zur direkten Messung des Verstellwegs des mit einer elektronisch abtastbaren Messskala bestückten Schiebers vorgesehen, die eine innerhalb des rotierenden Grundkörpers befindliche, batteriebetriebene Auswerteelektronik aufweist. Der Verschiebeweg kann an einer Digitalanzeige abgelesen werden, die ebenfalls im Werkzeugkopf angeordnet ist. In der Veröffentlichung "MACHINES PRODUCTION", Sofetec, Boulogne, Seine, FR, Nr. 546, 12. Dezember 1990 (1990-12-12), S. 89, 91, XP 00016911, ISSN: 0047-536X wird auf einen derartigen Werkzeugkopf, wie er aus der WO 91/03345 A1 bekannt ist, hingewiesen.

Aufgabe der vorliegenden Erfindung ist es, ein Feindrehwerkzeug der eingangs genannten Art derart weiterzubilden, dass einerseits sichergestellt ist, dass der Verstellweg auch bei erheblichem Hub des Werkzeugschlittens auf einfache Weise abgelesen werden kann und dass andererseits auftretende Zentrifugalkräfte nicht zu einer unbeabsichtigten Änderung der Stellung des Werkzeugschlittens führen.

Diese Aufgabe wird durch ein Feindrehwerkzeug mit den Merkmalen von Patentanspruch 1 gelöst.

Das erfindungsgemäße Feindrehwerkzeug zeichnet sich durch eine Montage des Schneidplattenträgers an dem in Verstellrichtung aus dem Werkzeugkörper herausragenden Ende des Werkzeugschlittens aus, wobei der Verstellweg unmittelbar an der Anzeigeeinrichtung abgelesen werden kann. Die Montage an dem aus dem Werkzeugkörper in Verstellrichtung herausragenden Ende des Werkzeugschlittens ermöglicht es, den Werkzeugschlitten über einen beträchtlichen Verstellweg, vorzugsweise einen Verstellweg von mehr als 5 mm, insbesondere einen Verstellweg von 7 bis 9 mm, zu verstellen. Der Verstellweg kann vom Benutzer auf einfache Weise an der Anzeigeeinrichtung abgelesen werden. Insbesondere kann vorgesehen sein, dass an der Anzeigeeinrichtung unmittelbar der Verstellweg in Mikrometer angegeben wird.

Die für das elektronische Wegmesssystem erforderliche Energie wird von der am oder im Werkzeugkörper angeordneten Energieversorgungseinrichtung bereitgestellt. Es ist nicht erforderlich, das elektronische Wegmesssystem mit einer externen Energiequelle zu verbinden.

Das erfindungsgemäße Feindrehwerkzeug zeichnet sich vorzugsweise durch einen Werkzeugkörper mit einem Außendurchmesser von weniger als 60 mm aus, insbesondere ein Außendurchmesser von maximal 55 mm. Besonders günstig hat sich ein Außendurchmesser des Werkzeugkörpers von maximal 50 mm erwiesen. Trotz des verhältnismäßig geringen Außendurchmessers kann der Werkzeugschlitten in radialer Richtung um mindestens 5 mm, vorzugsweise mindestens 7 mm verstellt werden.

Beim erfindungsgemäßen Feindrehwerkzeug ist im Werkzeugkörper eine Klemmeinrichtung angeordnet zum Festklemmen des Werkzeugschlittens in einer gewünschten Stellung, wobei die Klemmeinrichtung ein vom Benutzer betätigbares Klemmorgan aufweist zum Ausüben einer Klemmkraft, wobei die Klemmkraft über ein am Werkzeugschlitten plan anliegendes Kraftübertragungselement auf den Werkzeugschlitten übertragbar ist. Der Werkzeugschlitten kann in der vom Benutzer gewünschten Position festgeklemmt werden. Hierzu wird der Werkzeugschlitten mit einer Klemmkraft beaufschlagt, die von einem Klemmorgan, beispielsweise einer Klemmschraube, über ein Kraftübertragungselement auf den Werkzeugschlitten übertragen wird. Das Festklemmen des Werkzeugschlittens erfolgt also nicht unmittelbar vom Klemmorgan, vielmehr ist zwischen dem Klemmorgan und dem Werkzeugschlitten zumindest ein Kraftübertragungselement angeordnet. Das Kraftübertragungselement liegt plan am Werkzeugschlitten an. Es hat sich gezeigt, dass eine derartige Ausgestaltung der Klemmeinrichtung ein Festklemmen des Werkzeugschlittens ermöglicht, ohne dass die Gefahr besteht, dass der Werkzeugschlitten aufgrund der auf ihn einwirkenden Klemmkraft verstellt wird. Der Benutzer kann den Werkzeugschlitten in die gewünschte Stellung verschieben mit Hilfe des Feinverstellmechanismus. Die erzielte Position des Werkzeugschlittens kann der Benutzer an der Anzeigeeinrichtung unmittelbar ablesen. Hat der Werkzeugschlitten die gewünschte Endposition erreicht, so kann er mittels der Klemmeinrichtung festgeklemmt werden, wobei praktisch keine Gefahr besteht, dass der Werkzeugschlitten aufgrund der auf ihn einwirkenden Klemmkraft unbeabsichtigt verstellt wird.

Mittels der Klemmeinrichtung sind gleichzeitig der Werkzeugschlitten und der Ausgleichsschlitten festklemmbar. Bei Einsatz des Feindrehwerkzeuges unterliegen sowohl der Werkzeugschlitten als auch der Ausgleichsschlitten einer beträchtlichen Zentrifugalkraft. Damit die Zentrifugalkraft nicht zu einer Änderung der Stellung des Werkzeugschlittens führt, kann in der gewünschten Endstellung des Werkzeugschlittens nicht nur der Werkzeugschlitten selbst sondern auch der Ausgleichsschlitten festgeklemmt werden. Es sind somit beide Schlitten mittels der Klemmeinrichtung gleichzeitig festklemmbar. Dies ermöglicht es, mit Hilfe eines einzigen Klemmvorganges beide Schlitten zuverlässig in der gewünschten Endstellung zu fixieren.

Der Verstellweg des Werkzeugschlittens ist bei einer vorteilhaften Ausführungsform des erfindungsgemäßen Feindrehwerkzeuges berührungslos erfassbar. Es kann beispielsweise eine optische Erfassung des Verstellweges erfolgen.

Günstig ist es, wenn an der Anzeigeeinrichtung des Wegmesssystems ein Differenzwert anzeigbar ist, der den Verstellweg von einer vom Benutzer vorgebbaren Nullstellung zu einer aktuellen Position des Werkzeugschlittens wiedergibt.

Es kann vorgesehen sein, dass am Werkzeugschlitten ein Maßband angeordnet ist, welches vom Wegmesssystem berührungslos erfassbar ist. Günstigerweise ist das Maßband optisch abtastbar, wobei das vom Maßband reflektierte Licht von einem Sensor erfassbar und in einer elektronischen Auswerteeinheit auswertbar ist.

Die Energieversorgungseinrichtung umfasst vorzugsweise mindestens eine Batterie, die in den Werkzeugkörper einsetzbar ist.

Besonders günstig ist es, wenn das Kraftübertragungselement ein den Werkzeugschlitten gegen Verdrehen um die Verstellachse sicherndes Sicherungselement ausbildet. Das Kraftübertragungselement dient bei einer derartigen Ausgestaltung nicht nur zur Ausübung einer Klemmkraft, sondern das Kraftübertragungselement übernimmt auch die Funktion einer Verdrehsicherung, so dass sichergestellt ist, dass der Werkzeugschlitten beim Festklemmen nicht um die Verstellachse verdreht wird. Eine separate Verdrehsicherung kann somit entfallen.

Der Werkzeugschlitten ist bevorzugt im Wesentlichen zylinderförmig ausgestaltet. Dies vereinfacht die Herstellung und Montage des Werkzeugschlittens.

Günstigerweise ist das Kraftübertragungselement im Werkzeugkörper verstellbar gehalten. Die verstellbare Halterung ermöglicht es, das Kraftübertragungselement mit Spiel im Werkzeugkörper zu lagern, wobei das Spiel eingestellt werden kann. Durch Einstellung des Spieles kann auf einfache Weise gewährleistet werden, dass der Werkzeugschlitten selbst bei im Wesentlichen zylinderförmiger Ausgestaltung weder beim Verstellen noch beim Festklemmen in einer gewünschten Endposition eine Drehbewegung ausführt. Darüber hinaus ist durch die verstellbare Halterung des Kraftübertragungselementes sichergestellt, dass dieses den Werkzeugschlitten beim Festklemmen in einer gewünschten Position nicht in radialer Richtung verschiebt.

Das Kraftübertragungselement ist bevorzugt mit Spiel im Werkzeugkörper gehalten, wobei das Spiel mittels eines Justierelementes einstellbar ist. Als Justierelement kann beispielsweise eine Justierschraube zum Einsatz kommen.

Von besonderem Vorteil ist es, wenn das Kraftübertragungselement als Keilstück ausgestaltet ist, das mit einer Keilfläche plan am Werkzeugstück anliegt.

Besonders günstig ist es, wenn das Keilstück im Werkzeugkörper parallel zu dessen Drehachse verstellbar ist. Es hat sich gezeigt, dass dadurch das Einstellen der optimalen Position des Keilstückes relativ zum Werkzeugschlitten vereinfacht wird.

Von Vorteil ist es, wenn das Keilstück in einer Ausnehmung des Werkzeugkörpers gehalten ist, die von einem Deckel abgedeckt ist, wobei im Deckel ein mit dem Keilstück zusammenwirkendes Justierelement verstellbar gelagert ist. Dies ermöglicht es, den Bauraum für das mit Spiel im Werkzeugkörper gehaltene Keilstück und des mit diesem zusammenwirkenden Justierelementes besonders gering zu halten.

Die Klemmeinrichtung weist vorzugsweise einen Klemmbolzen auf, der vom Klemmorgan mit einer Klemmkraft beaufschlagbar ist und der in einem ersten Längsabschnitt eine Klemmkraft auf das Kraftübertragungselement ausübt und der in einem zweiten Längsabschnitt eine Klemmkraft auf den Ausgleichsschlitten ausübt.

Von besonderem Vorteil ist es, wenn der Klemmbolzen in seinem ersten Längsabschnitt unmittelbar am Kraftübertragungselement anliegt. Vor allem eine flächige Anlage, insbesondere eine plane Anlage des Klemmbolzens am Kraftübertragungselement hat sich als besonders günstig erwiesen.

In seinem zweiten Längsabschnitt liegt der Klemmbolzen bevorzugt unmittelbar am Ausgleichsschlitten an. Der Ausgleichsschlitten wird somit vom Klemmbolzen unmittelbar mit einer Klemmkraft beaufschlagt, wohingegen der Werkzeugschlitten nur indirekt vom Klemmbolzen mit einer Klemmkraft beaufschlagt wird, da zwischen dem Klemmbolzen und dem Werkzeugschlitten das Kraftübertragungselement angeordnet ist.

Von besonderem Vorteil im Hinblick auf die Erzielung eines möglichst geringen Bauraums ist es, wenn der Klemmbolzen und das Kraftübertragungselement in einer gemeinsamen Ausnehmung des Werkzeugkörpers angeordnet sind, die von einem Deckel überdeckt ist, in dem ein mit dem Kraftübertragungselement zusammenwirkendes Justierelement verstellbar gelagert ist.

Wie bereits erläutert, kann das Kraftübertragungselement in Form eines Keilstückes ausgestaltet sein, das mit einer ersten Keilfläche plan am Werkzeugschlitten anliegt. Bevorzugt weist das Keilelement eine zweite Keilfläche auf, an der der Klemmbolzen plan anliegt.

Das Keilstück ist bevorzugt senkrecht zu der vom Klemmbolzen über das Keilstück auf den Werkzeugschlitten ausübbaren Klemmkraft verstellbar. Dies ermöglicht es, das Keilstück derart zu positionieren, dass der Werkzeugschlitten auf einfache Weise mittels des Feinverstellmechanismus in radialer Richtung bezogen auf die Drehachse des Werkzeugkörpers verstellt werden kann, nachdem der Benutzer zuvor das Klemmorgan gelöst hat, wobei der Werkzeugschlitten dann aber in einer gewünschten Endstellung auf einfache Weise durch Betätigen des Klemmorgans festgeklemmt werden kann, wobei mittels des Klemmbolzens sowohl der Werkzeugschlitten als auch der Ausgleichsschlitten arretiert werden.

Das Spiel des Keilstückes ist bevorzugt mittels einer Justierschraube einstellbar, die im Deckel verdrehbar gelagert ist, der die gemeinsame Ausnehmung für den Klemmbolzen und das Keilstück überdeckt.

Wie bereits erläutert, kann die Stellung des Werkzeugschlittens mit Hilfe des elektronischen Wegmesssystems erfasst werden. Die Energieversorgung wird von der Energieversorgungseinrichtung bereitgestellt. Diese ist bevorzugt in einem Batteriefach des Werkzeugkörpers angeordnet, das flüssigkeitsdicht verschließbar ist.

Es kann beispielsweise vorgesehen sein, dass das Batteriefach von einem Deckel abgedeckt ist, wobei zwischen dem Deckel und dem Werkzeugkörper zumindest ein Dichtelement angeordnet ist.

Günstigerweise umfasst der Werkzeugkörper einen Schaft zum drehfesten Verbinden mit der Spindel einer Werkzeugmaschine und das Batteriefach ist an der dem Schaft abgewandten Stirnseite des Werkzeugkörpers zugänglich.

Alternativ kann vorgesehen sein, dass das Batteriefach an einer Mantelfläche des Werkzeugkörpers zugänglich ist. Das Batteriefach ist bei einer derartigen Ausgestaltung vorteilhafterweise zwischen dem Schaft des Werkzeugkörpers und dem Ausgleichsschlitten angeordnet.

Das elektronische Wegmesssystem ist bevorzugt in Höhe des Übertragungsmechanismus positioniert, über den der Werkzeugschlitten mit dem Ausgleichsschlitten gekoppelt ist.

Der Übertragungsmechanismus umfasst bei einer vorteilhaften Ausführungsform ein Zahnrad oder eine Zahnwalze, die mit Zahnreihen des Werkzeugschlittens und des Ausgleichsschlittens kämmt.

Der Ausgleichsschlitten ist bei einer vorteilhaften Ausführungsform an einem Führungsbolzen verschiebbar gehalten, der eine Ausnehmung des Werkzeugkörpers durchgreift. Der Führungsbolzen ermöglicht eine einfache Führung des Ausgleichsschlittens längs der Ausgleichsachse.

Vorteilhafterweise ist der Führungsbolzen koaxial zur Ausgleichsachse ausgerichtet.

Von besonderem Vorteil ist es, wenn die den Ausgleichsschlitten aufnehmende Ausnehmung einen Durchgang des Werkzeugkörpers ausbildet, der an seinen beiden Enden jeweils von einem Deckel verschlossen ist, wobei der Führungsbolzen die beiden Deckel miteinander verbindet. Dies vereinfacht die Fertigung und Montage des Feindrehwerkzeuges.

Günstig ist es, wenn der Ausgleichsschlitten in Umfangsrichtung von einem elastischen Führungselement umgeben ist, das an der Wand einer den Ausgleichsschlitten aufnehmenden Ausnehmung des Werkzeugkörpers anliegt.

Vorzugsweise ist das elastische Führungselement in einer Ringnut des Ausgleichsschlittens angeordnet.

Es kann beispielsweise vorgesehen sein, dass das elastische Führungselement in Form eines Dichtringes ausgestaltet ist, der den Ausgleichsschlitten in Umfangsrichtung umgibt.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer ersten Ausführungsform eines erfindungsgemäßen Feindrehwerkzeuges;
- Figur 2:: eine Seitenansicht des Feindrehwerkzeuges aus Figur 1;
- Figur 3:: eine Schnittansicht des Feindrehwerkzeuges längs der Linie 3-3 in Figur 2;
- Figur 4:: eine vergrößerte Darstellung von Detail X aus Figur 3;
- Figur 5:: eine Schnittansicht längs der Linie 5-5 in Figur 3, wobei ein Werkzeugschlitten des Feindrehwerkzeuges eine innere Endstellung einnimmt;
- Figur 6:: eine Schnittansicht gemäß Figur 5, wobei der Werkzeugschlitten eine äußere Endstellung einnimmt, und
- Figur 7:: eine Schnittansicht gemäß Figur 3 einer zweiten Ausführungsform eines erfindungsgemäßen Feindrehwerkzeuges.

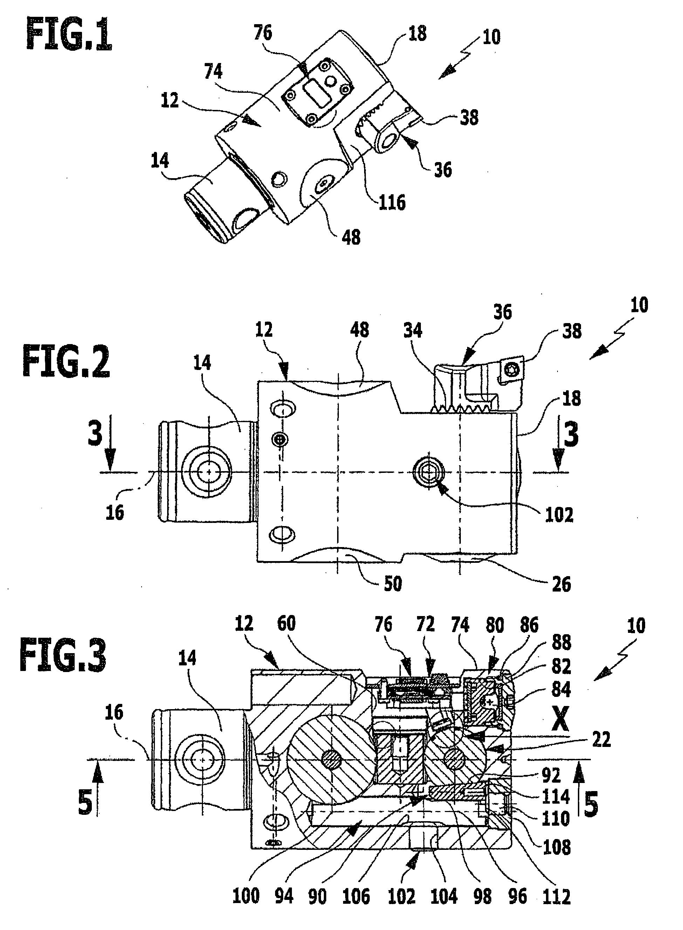

In den Figuren 1 bis 6 ist schematisch eine erste Ausführungsform eines erfindungsgemäßen Feindrehwerkzeuges dargestellt, das insgesamt mit dem Bezugszeichen 10 belegt ist. Es umfasst einen im Wesentlichen kreiszylindrischen Werkzeugkörper 12, von dem ein Schaft 14 absteht, der, beispielsweise mittels eines Spannfutters, in eine drehend angetriebene Spindel einer Werkzeugmaschine eingespannt werden kann, so dass das Feindrehwerkzeug 10 zusammen mit der Spindel der Werkzeugmaschine um eine gemeinsame Drehachse 16 umläuft.

Einer dem Schaft 14 abgewandten Stirnseite 18 des Werkzeugkörpers 12 benachbart weist der Werkzeugkörper 12 eine vordere Ausnehmung 20 auf, die senkrecht zur Drehachse 16 den Werkzeugkörper 12 durchgreift und in die ein Werkzeugschlitten 22 eingesetzt ist. Der Werkzeugschlitten 22 kann längs einer Verstellachse 24, die senkrecht zur Drehachse 16 ausgerichtet ist, verstellt werden. Hierzu kommt ein Feinverstellmechanismus zum Einsatz mit einem Deckel 26, der an einem Ende der vorderen Ausnehmung 20 gehalten ist, und einer Spindel 28, die im Deckel 26 drehbar gelagert ist. Die Spindel 28 taucht in eine Längsbohrung 30 des Werkzeugkörpers 12 ein und wirkt mit einem in der Längsbohrung 30 angeordneten, in der Zeichnung nicht dargestellten Innengewinde zusammen. Durch Verdrehen der Spindel 28 kann der Werkzeugschlitten 22 längs der Verstellachse 24 in radialer Richtung verstellt werden.

Der Werkzeugschlitten 22 ragt mit einem bezogen auf die Verstellachse 24 stirnseitigen Ende 32, das dem Deckel 26 abgewandt ist, aus der vorderen Ausnehmung 20 heraus und bildet eine Montagefläche 34, an der ein Schneidplattenhalter 36 montiert werden kann. Der Schneidplattenhalter 36 trägt eine Schneidplatte 38 zur spanabhebenden Bearbeitung eines Werkstückes.

Im Abstand zur vorderen Ausnehmung 20 weist der Werkzeugkörper 12 eine hintere Ausnehmung 40 auf, die parallel zur vorderen Ausnehmung 20 verläuft und einen Ausgleichsschlitten 42 aufnimmt. Die hintere Ausnehmung 40 bildet einen Durchgang des Werkzeugkörpers 12, der an seinen beiden Enden von einem ersten Deckel 48 bzw. einen zweiten Deckel 50 verschlossen ist. Der Ausgleichsschlitten 42 weist eine Längsbohrung 44 auf, die von einem Führungsbolzen 46 durchgriffen ist. Der Führungsbolzen 46 verbindet den ersten Deckel 48 mit dem zweiten Deckel 50. Der Ausgleichsschlitten 42 ist längs des Führungsbolzens 46, der koaxial zu einer Ausgleichsachse 52 ausgerichtet ist, verschiebbar. Die Ausgleichsachse 52 verläuft parallel zur Verstellachse 24 des Werkzeugschlittens 22.

Der Werkzeugschlitten 22 ist über einen Übertragungsmechanismus 54 mit dem Ausgleichsschlitten 42 gekoppelt. Der Übertragungsmechanismus 54 umfasst eine Zahnwalze 56, die in einer zwischen der vorderen Ausnehmung 20 und der hinteren Ausnehmung 40 angeordneten mittleren Ausnehmung 60 des Werkzeugkörpers 12 um eine senkrecht zur Drehachse 16 und senkrecht zur Verstellachse 24 ausgerichtete Zahnwalzenachse 62 drehbar gelagert ist. Die Zahnwalze 56 kämmt einerseits mit einer ersten Zahnreihe 64, die außenseitig am Werkzeugschlitten 22 angeordnet ist, und andererseits mit einer zweiten Zahnreihe 66, die außenseitig am Ausgleichsschlitten 42 angeordnet ist. Wird der Werkzeugschlitten 22 mittels der Spindel 28 längs der Verstellachse 24 verschoben, so führt der Ausgleichsschlitten 42 eine entgegen der Bewegung des Werkzeugschlittens 22 gerichtete Ausgleichsbewegung längs der Ausgleichsachse 52 aus, so dass sich die jeweiligen Massen des Werkzeugschlittens 22 und des Ausgleichsschlittens 42 so verlagern, dass das Feindrehwerkzeug 10 insgesamt selbsttätig stets ausgewuchtet ist.

Der Ausgleichsschlitten 42 weist entlang seines Umfangs eine Ringnut 68 auf, in der ein elastisches Führungselement in Form eines Dichtringes 70 angeordnet ist, der beim Verschieben des Ausgleichsschlittens 42 an der Wand der hinteren Ausnehmung 40 entlang gleitet und den Ausgleichsschlitten 42 führt.

Die mittlere Ausnehmung 60 erweitert sich oberhalb der Zahnwalze 56 und nimmt ein elektronisches Wegmesssystem 72 auf, das im Bereich einer Mantelfläche 74 des Werkzeugkörpers 12 eine digitale Anzeigeeinrichtung 76 aufweist, an der der Benutzer den Verstellweg des Werkzeugschlittens 22 in Mikrometer ablesen kann, wobei der Verstellweg dem Differenzwert entspricht zwischen einer vom Benutzer vorgegebenen Nullstellung des Werkzeugschlittens 22 und dessen aktueller Stellung, die er zur Bearbeitung eines Werkstückes einnimmt. Zum Erfassen des Verstellweges wird die Position des Werkzeugschlittens 22 vom elektronischen Wegmesssystem 72 berührungslos erfasst. Der Werkzeugschlitten 22 trägt hierzu außenseitig, dem elektronischen Wegmesssystem 72 zugewandt ein Maßband 78, das vom elektronischen Wegmesssystem 72 optisch abgetastet wird, wobei das vom Maßband 78 reflektierte Licht von einem Sensor des elektronischen Wegmesssystems 72 erfasst und ein entsprechendes Sensorsignal von einer elektronischen Auswerteeinrichtung des Wegmesssystems 72 ausgewertet wird. Derartige elektronische Wegmesssysteme 72 sind dem Fachmann an sich bekannt und bedürfen daher vorliegend keiner detaillierten Erläuterung. Mittels des elektronischen Wegmesssystems 72 ist der Verstellweg des Werkzeugschlittens 22 berührungslos erfassbar und an der Anzeigeeinrichtung 76 anzeigbar.

Zur Energieversorgung des elektronischen Wegmesssystems 72 weist das Feindrehwerkzeug 10 eine Energieversorgungseinrichtung 80 auf. Diese ist in einem Batteriefach 82 angeordnet und umfasst mindestens eine Batterie 84, die in das Batteriefach 82 einsetzbar ist. Über an sich bekannte und deshalb in der Zeichnung nicht dargestellte elektrische Verbindungsleitungen ist die mindestens eine Batterie 84 elektrisch leitend mit dem elektronischen Wegmesssystem 72 verbunden. Das Batteriefach mündet bei der in den Figuren 1 bis 6 dargestellten Ausführungsform in die dem Schaft 14 abgewandte Stirnseite 18 des Werkzeugkörpers 12 und ist unter Zwischenlage eines Dichtringes 86 von einem Deckel 88 flüssigkeitsdicht verschlossen. Durch Lösen des Deckels 88 ist das Batteriefach 82 für einen Austausch der mindestens einen Batterie 84 zugänglich.

Der Werkzeugschlitten 22 ist mit Ausnahme einer auf der dem elektronischen Wegmesssystem 72 und der Energieversorgungseinrichtung 80 abgewandten Unterseite angeordneten Abflachung kreiszylindrisch ausgestaltet. An der flachen Unterseite liegt ein Kraftübertragungselement in Form eines Keilstückes 90 mit einer ersten Keilfläche 92 plan an. Das Keilstück 90 ist zwischen dem Werkzeugschlitten 22 und einem parallel zur Drehachse 16 des Werkzeugkörpers 12 ausgerichteten Klemmbolzen 94 angeordnet, der in einem ersten Längsabschnitt 96 an einer der ersten Keilfläche 92 abgewandten zweiten Keilfläche 98 des Keilstückes 90 flächig anliegt. In einem zweiten Längsabschnitt 100 liegt der Klemmbolzen 94 flächig am Ausgleichsschlitten 42 an.

Mit Hilfe eines Klemmorgans in Form einer Klemmschraube 102 kann der Klemmbolzen 94 gleichzeitig eine Klemmkraft sowohl auf den Werkzeugschlitten 22 als auch auf den Ausgleichsschlitten 42 ausüben, so dass beide Schlitten gleichzeitig durch Betätigen der Klemmschraube 102 festgeklemmt werden können. Die Klemmschraube 102 durchgreift eine Radialbohrung 104 des Werkzeugkörpers 12 und mündet in eine Längsausnehmung 106, die sowohl den Klemmbolzen 94 als auch das Keilstück 90 aufnimmt und an der Stirnseite 18 von einem Deckel 108 verschlossen ist.

Im Deckel 108 ist ein Justierelement in Form einer Justierschraube 110 drehbar gelagert. Die Justierschraube 110 liegt mit einer Justierfläche 112 an einer der Stirnseite 18 des Werkzeugkörpers 12 zugewandten Oberseite 114 des Keilstückes 90 an. Durch Verdrehen der Justierschraube 110 kann die Position des Keilstückes 90 parallel zur Drehachse 16 des Werkzeugkörpers 12 verstellt werden. Dies erlaubt es, das Spiel des Keilstückes 90 mittels des Justierschraube 110 einzustellen, so dass einerseits gewährleistet ist, dass der Werkzeugschlitten 22 nach Lösen der Klemmschraube 102 durch Verdrehen der Spindel 28 in radialer Richtung verstellt werden kann, um einen gewünschten Ausdreh- oder Ausbohrradius einzustellen, dass aber andererseits der Werkzeugschlitten 22 und der Ausgleichsschlitten 42 durch Festziehen der Klemmschraube 102 gleichzeitig festgeklemmt werden können.

Beim Festklemmen des Werkzeugschlittens 22 wird ausgehend von der Klemmschraube 102 über den Klemmbolzen 94 und das Keilstück 90 eine Klemmkraft auf den Werkzeugschlitten 22 ausgeübt. Die flächige Anlage des Keilstückes 90 am Werkzeugschlitten 22 stellt sicher, dass der Werkzeugschlitten 22 beim Festklemmen weder in Richtung der Verstellachse 24 verschoben noch um die Verstellachse 24 gekippt wird. Das Festklemmen des Werkzeugschlittens 22 führt somit nicht zu einer Änderung von dessen Position längs der Verstellachse 24 und damit nicht zu einer Änderung des an der Anzeigeeinrichtung 76 angezeigten Verstellweges.

Das Keilstück 90 übernimmt nicht nur die Funktion eines Kraftübertragungselementes, über das die Klemmkraft auf den Werkzeugschlitten 22 übertragen werden kann, sondern gleichzeitig bildet das Keilstück 90 aufgrund der flächigen Anlage seiner ersten Keilfläche 92 an der flachen Unterseite des Werkzeugschlittens 22 eine Verdrehsicherung, die sicherstellt, dass der Werkzeugschlitten 22 beim Verstellen längs der Verstellachse 24 keine Drehbewegung um die Verstellachse 24 ausführt.

Das Keilstück 90 ist gemeinsam mit dem Klemmbolzen 94 in der Längsausnehmung 106 des Werkzeugkörpers 12 angeordnet, die vom Deckel 108 verschlossen ist. Dies ermöglicht eine sehr kompakte Ausgestaltung des Feindrehwerkzeuges 10, wobei der Außendurchmesser des Werkzeugkörpers 12 verhältnismäßig gering gehalten werden kann trotz des Einsatzes des Wuchtausgleichs mittels des Ausgleichsschlittens 42 und des Übertragungsmechanismus 54 und des Einsatzes des elektronischen Wegmesssystems 72 mit digitaler Anzeigeeinrichtung 76. Der Außendurchmesser des Werkzeugkörpers 12 kann weniger als 60 mm betragen, beispielsweise 50 bis 55 mm. Es kann auch vorgesehen sein, dass der Außendurchmesser des Werkzeugkörpers 12 weniger als 50 mm beträgt. Insbesondere kann der Außendurchmesser des Werkzeugkörpers 12 weniger als 45 mm betragen, beispielsweise 42 mm. Trotz des verhältnismäßig geringen Außendurchmessers des Werkzeugkörpers 12 beträgt der vom Werkzeugschlitten 22 erzielbare Hub, das heißt der Verstellweg, den der Werkzeugschlitten 22 zurücklegen kann, mehr als 5 mm, beispielsweise 7 bis 9 mm.

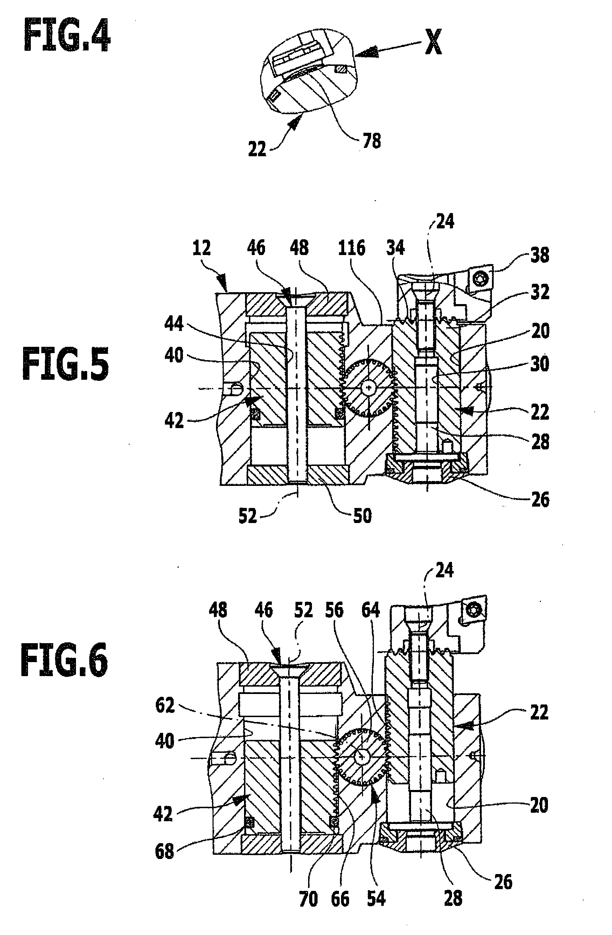

Der Werkzeugschlitten 22 ist in Figur 5 in einer inneren Endstellung dargestellt, in der er fast vollständig in die vordere Ausnehmung 20 eintaucht, so dass die Montagefläche 34 in Höhe einer außenseitigen Abflachung 116 des Werkzeugkörpers 12 positioniert ist. Diese Stellung des Werkzeugschlittens 22 entspricht einem minimalen Ausdreh- oder Ausbohrradius. Durch Verdrehen der Spindel 28 kann der Werkzeugschlitten 22 in die dem Deckel 26 abgewandte Richtung so weit aus der vorderen Ausnehmung 20 herausgeschoben werden, dass die Montagefläche 34 die in Figur 6 dargestellte äußere Endstellung einnimmt, die einem maximalen Ausdreh- oder Ausbohrradius entspricht. Die Wegdifferenz zwischen der in Figur 5 dargestellten inneren Endstellung und der in Figur 6 dargestellten äußeren Endstellung des Werkzeugschlittens 22 entspricht dem Hub, den dieser zurücklegen kann. Dieser beträgt mindestens 5 mm, vorzugsweise 7 bis 9 mm.

Der Hub des Werkzeugschlittens 22 kann insbesondere etwa ein Drittel von dessen Länge bezogen auf die Verstellachse 24 betragen.

Über den gesamten Verstellweg des Werkzeugschlittens 22 ist das Feindrehwerkzeug 10 aufgrund der gegenläufigen Bewegung des Ausgleichschlittens 42 ausgewuchtet. Dies ermöglicht hoch präzise Bearbeitungen eines Werkstückes, wobei eine sehr hohe Schnittgeschwindigkeit erzielt werden kann bei verhältnismäßig geringer Baugröße des Werkzeugkörpers 12.

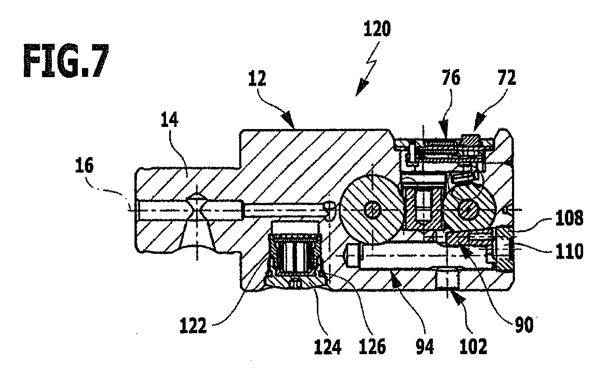

Bei der in den Figuren 1 bis 6 dargestellten ersten Ausführungsform eines erfindungsgemäßen Feindrehwerkzeuges ist das Batteriefach im Bereich der Stirnseite 18 des Werkzeugkörpers 12 angeordnet. Eine derartige Positionierung des Batteriefaches 82 ist jedoch nicht zwingend erforderlich. In Figur 7 ist eine zweite Ausführungsform eines erfindungsgemäßen Feindrehwerkzeuges dargestellt, die insgesamt mit dem Bezugszeichen 120 belegt ist. Das Feindrehwerkzeug 120 ist weitgehend identisch ausgestaltet wie das voranstehend erläuterte Feindrehwerkzeug 10. Für identische Bauteile werden daher in Figur 7 dieselben Bezugszeichen verwendet wie in den Figuren 1 bis 6 und zur Vermeidung von Wiederholungen wird bezüglich dieser Bauteile auf die voranstehenden Erläuterungen Bezug genommen.

Das Feindrehwerkzeug 120 unterscheidet sich vom Feindrehwerkzeug 10 dadurch, dass statt des stirnseitig angeordneten Batteriefachs 82 ein seitlich angeordnetes Batteriefach 122 zum Einsatz kommt, das unterhalb der Längsausnehmung 106 in einem Bereich zwischen der hinteren Ausnehmung 40 und dem Schaft 14 angeordnet ist. Auch das Batteriefach 122 nimmt mindestens eine Batterie 84 auf und kann mittels eines seitlich angeordneten Deckels 124 unter Zwischenlage eines Dichtringes 126 flüssigkeitsdicht verschlossen werden. Über in der Zeichnung nicht dargestellte elektrische Verbindungsleitungen ist die im Batteriefach 120 angeordnete mindestens eine Batterie 84 elektrisch leitend mit dem elektronischen Wegmesssystem 72 verbunden.

Das in Figur 7 dargestellte Feindrehwerkzeug 120 zeichnet sich durch einen besonders geringen Außendurchmesser des Werkzeugkörpers 12 auf. Der Außendurchmesser kann beispielsweise weniger als 45 mm betragen, insbesondere 42 mm. Trotz des sehr geringen Bauraums weist das Feindrehwerkzeug 120 einen beträchtlichen Hub des Werkzeugschlittens 22 auf, wobei das Feindrehwerkzeug 120 über den gesamten Verstellweg des Werkzeugschlittens 22 durch den Einsatz des gegenläufigen Ausgleichsschlittens 42 ausgewuchtet ist und daher für hochpräzise Bearbeitungen eines Werkstückes zum Einsatz kommen kann.

## Patentansprüche

1. Feindrehwerkzeug (10) mit einem um eine Drehachse (16) drehend antreibbaren Werkzeugkörper (12), in dem ein Werkzeugschlitten (22) und ein über einen Übertragungsmechanismus (54) mit dem Werkzeugschlitten (22) gekoppelter Ausgleichsschlitten (42) verschiebbar gelagert sind, wobei der Werkzeugschlitten (22) mittels eines Feinverstellmechanismus (26, 28) längs einer senkrecht zur Drehachse (16) ausgerichteten Verstellachse (24) verschiebbar ist, und wobei der Ausgleichsschlitten (42) mittels des Übertragungsmechanismus (54) zum Unwuchtausgleich selbsttätig längs einer parallel zur Verstellachse (24) ausgerichteten Ausgleichsachse (52) entgegen der Bewegung des Werkzeugschlittens (22) verschiebbar ist, und wobei der Werkzeugschlitten (22) an einem in Verstellrichtung aus dem Werkzeugkörper (12) herausragenden Ende (32) eine Montagefläche (34) aufweist, an der ein Schneidplattenträger (36) montierbar ist, **dadurch gekennzeichnet, dass** das Feindrehwerkzeug (10; 120) ein elektronisches Wegmesssystem (72) mit einer Anzeigeeinrichtung (76) sowie eine Energieversorgungseinrichtung (80) zur Energieversorgung des Wegmesssystems (72) umfasst, wobei mittels des Wegmesssystems (72) der Verstellweg des Werkzeugschlittens (22) erfassbar und an der Anzeigeeinrichtung (76) anzeigbar ist, und dass im Werkzeugkörper (12) eine Klemmeinrichtung (102, 94) angeordnet ist zum Festklemmen des Werkzeugschlittens (22) in einer gewünschten Stellung, wobei die Klemmeinrichtung ein vom Benutzer betätigbares Klemmorgan (102) aufweist zum Ausüben einer Klemmkraft, wobei die Klemmkraft über ein am Werkzeugschlitten (22) plan anliegendes Kraftübertragungselement (90) auf den Werkzeugschlitten (22) übertragbar ist und mittels der Klemmeinrichtung gleichzeitig der Werkzeugschlitten (22) und der Ausgleichsschlitten (42) festklemmbar sind.

2. Feindrehwerkzeug nach Anspruch 1, **dadurch gekennzeichnet, dass** am Werkzeugschlitten (22) ein vom Wegmesssystem (72) berührungslos erfassbarer Maßstab (78) angeordnet ist.

3. Feindrehwerkzeug nach Anspruch 1 oder 2, **dadurch gekennzeichnet, dass** das Kraftübertragungselement (90) ein den Werkzeugschlitten (22) gegen Verdrehen um die Verstellachse (24) sicherndes Sicherungselement ausbildet.

4. Feindrehwerkzeug nach Anspruch 1, 2 oder 3, **dadurch gekennzeichnet, dass** das Kraftübertragungselement (90) im Werkzeugkörper (12) verstellbar gehalten ist.

5. Feindrehwerkzeug nach einem der voranstehenden Ansprüche, **dadurch gekennzeichnet, dass** das Kraftübertragungselement (90) mit Spiel im Werkzeugkörper (12) gehalten ist, wobei das Spiel mittels eines Justierelements (110) einstellbar ist.

6. Feindrehwerkzeug nach einem der voranstehenden Ansprüche, **dadurch gekennzeichnet, dass** das Kraftübertragungselement als Keilstück (90) ausgestaltet ist, das mit einer Keilfläche (92) plan am Werkzeugschlitten (22) anliegt.

7. Feindrehwerkzeug nach einem der voranstehenden Ansprüche, **dadurch gekennzeichnet, dass** die Klemmeinrichtung einen Klemmbolzen (94) aufweist, der vom Klemmorgan (102) mit einer Klemmkraft beaufschlagbar ist, wobei er in einem ersten Längsabschnitt (96) eine Klemmkraft auf das Kraftübertragungselement (90) ausübt und in einem zweiten Längsabschnitt (100) eine Klemmkraft auf den Ausgleichsschlitten (42) ausübt.

8. Feindrehwerkzeug nach Anspruch 7, **dadurch gekennzeichnet, dass** der Klemmbolzen (94) in seinem ersten Längsabschnitt (96) unmittelbar am Kraftübertragungselement (90) anliegt.

9. Feindrehwerkzeug nach Anspruch 7 oder 8, **dadurch gekennzeichnet, dass** der Klemmbolzen (94) in seinem zweiten Längsabschnitt (100) unmittelbar am Ausgleichsschlitten (42) anliegt.

10. Feindrehwerkzeug nach einem der voranstehenden Ansprüche, **dadurch gekennzeichnet, dass** die Energieversorgungseinrichtung (80) in einem Batteriefach (82) des Werkzeugkörpers (12) angeordnet ist, das flüssigkeitsdicht verschließbar ist.

11. Feindrehwerkzeug nach Anspruch 10, **dadurch gekennzeichnet, dass** der Werkzeugkörper (12) einen Schaft (14) zum drehfesten Verbinden mit der Spindel einer Werkzeugmaschine aufweist und dass das Batteriefach (82) an der dem Schaft (14) abgewandten Stirnseite (18) des Werkzeugkörpers (12) zugänglich ist.

12. Feindrehwerkzeug nach einem der voranstehenden Ansprüche, **dadurch gekennzeichnet, dass** der Ausgleichsschlitten (42) an einem Führungsbolzen (46) verschiebbar gehalten ist, der eine Ausnehmung (40) des Werkzeugkörpers (12) durchgreift.

13. Feindrehwerkzeug nach Anspruch 12, **dadurch gekennzeichnet, dass** die Ausnehmung (40) einen Durchgang des Werkzeugkörpers (12) ausbildet, der an seinen beiden Enden jeweils von einem Deckel (48, 50) verschlossen ist, wobei der Führungsbolzen (46) die Deckel (48, 50) miteinander verbindet.

## Claims

1. Precision turning tool (10) with a tool body (12) which is rotatingly drivable about an axis of rotation (16) and in which a tool slide (22) and a compensating slide (42) coupled to the tool slide (22) via a transmission mechanism (54) are displaceably mounted, the tool slide (22) being displaceable by means of a precision adjustment mechanism (26, 28) along an axis of adjustment (24) aligned at right angles to the axis of rotation (16), and the compensating slide (42) being automatically displaceable by means of the transmission mechanism (54) along an axis of compensation (52) aligned parallel to the axis of adjustment (24) contrary to the movement of the tool slide (22) to compensate for any imbalance, and the tool slide (22) having at an end (32) protruding out of the tool body (12) in a direction of adjustment a mounting surface (34) on which a cutting plate carrier (36) can be mounted, **characterized in that** the precision turning tool (10; 120) comprises an electronic distance measuring system (72) with a display unit (76) as well as an energy supply device (80) for supplying energy to the distance measuring system (72), the distance of adjustment of the tool slide (22) being detectable by means of the distance measuring system (72) and displayable on the display unit (76), and **in that** a clamping device (102, 94) is arranged in the tool body (12) for clamping the tool slide (22) securely in a desired position, the clamping device having a clamping body (102) actuatable by the user for exerting a clamping force, the clamping force being transferable to the tool slide (22) via a force transmission element (90) lying flat on the tool slide (22), and the tool slide (22) and the compensating slide (42) being securely clampable by means of the clamping device at the same time.

2. Precision turning tool in accordance with claim 1, **characterized in that** a measuring scale (78) detectable by the distance measuring system (72) without contact is arranged on the tool slide (22).

3. Precision turning tool in accordance with claim 1 or 2, **characterized in that** the force transmission element (90) forms a securing element securing the tool slide (22) against any turning about the axis of adjustment (24).

4. Precision turning tool in accordance with claim 1, 2 or 3, **characterized in that** the force transmission element (90) is held in the tool body (12) so as to be adjustable.

5. Precision turning tool in accordance with any one of the preceding claims, **characterized in that** the force transmission element (90) is held in the tool body (12) with clearance, the clearance being adjustable by means of an adjusting element (110).

6. Precision turning tool in accordance with any one of the preceding claims, **characterized in that** the force transmission element is designed as a wedge-shaped piece (90) lying flat on the tool slide (22) with a wedge surface (92).

7. Precision turning tool in accordance with any one of the preceding claims, **characterized in that** the clamping device comprises a clamping bolt (94) which can be acted upon with a clamping force by the clamping body (102), the clamping bolt exerting a clamping force on the force transmission element (90) in a first longitudinal section (96) and exerting a clamping force on the compensating slide (42) in a second longitudinal section (100).

8. Precision turning tool in accordance with claim 7, **characterized in that** the clamping bolt (94) abuts directly on the force transmission element (90) in its first longitudinal section (96).

9. Precision turning tool in accordance with claim 7 or 8, **characterized in that** the clamping bolt (94) abuts directly on the compensating slide (42) in its second longitudinal section (100).

10. Precision turning tool in accordance with any one of the preceding claims, **characterized in that** the energy supply device (80) is arranged in a battery compartment (82) of the tool body (12), which is closable so as to be fluid-tight.

11. Precision turning tool in accordance with claim 10, **characterized in that** the tool body (12) has a shaft (14) for rotationally fixed connection to the spindle of a machine tool, and **in that** the battery compartment (82) is accessible at the end face (18) of the tool body (12) facing away from the shaft (14).

12. Precision turning tool in accordance with any one of the preceding claims, **characterized in that** the compensating slide (42) is held for displacement on a guide bolt (46) passing through a recess (40) in the tool body (12).

13. Precision turning tool in accordance with claim 12, **characterized in that** the recess (40) forms a passage of the tool body (12) closed at each of its two ends by a cover (48, 50), with the guide bolt (46) connecting the covers (48, 50) to each other.

## Revendications

1. Outil de tournage de précision (10) comprenant un corps d'outil (12) qui peut être entraîné en rotation autour d'un axe de rotation (16), et dans lequel sont montés de manière à pouvoir coulisser, un coulisseau d'outil (22) et un coulisseau d'équilibrage (42) couplé au coulisseau d'outil (22) par l'intermédiaire d'un mécanisme de transmission (54), outil
dans lequel le coulisseau d'outil (22) peut coulisser, au moyen d'un mécanisme de réglage de précision (26, 28), le long d'un axe de réglage (24) orienté perpendiculairement à l'axe de rotation (16), et
dans lequel le coulisseau d'équilibrage (42) peut coulisser automatiquement pour l'équilibrage du balourd, au moyen du mécanisme de transmission (54), le long d'un axe d'équilibrage (52) orienté parallèlement à l'axe de réglage (24), à l'encontre du mouvement du coulisseau d' outil (22), et
dans lequel le coulisseau d'outil (22) présente, à une extrémité (32) faisant saillie hors du corps d'outil (12) dans la direction de réglage, une surface de montage (34) sur laquelle peut être monté un support de plaquette de coupe (36),
**caractérisé en ce que** l'outil de tournage de précision (10; 120) comprend un système électronique de mesure de déplacement (72) avec un dispositif de visualisation (76), ainsi qu'un dispositif d'alimentation en énergie (80) pour alimenter en énergie le système de mesure de déplacement (72), le système de mesure de déplacement (72) permettant de relever le déplacement de réglage du coulisseau d'outil (22) et de le visualiser au niveau du dispositif de visualisation (76), et **en ce que** dans le corps d'outil (12) est agencé un dispositif de serrage (102, 94) pour bloquer le coulisseau d'outil (22) dans une position souhaitée, le dispositif de serrage présentant un organe de serrage (102), qui peut être actionné par l'utilisateur, pour exercer une force de serrage, la force de serrage pouvant être transmise au coulisseau d'outil (22) par l'intermédiaire d'un élément de transmission de force (90) s'appuyant de manière plane sur le coulisseau d'outil (22), et le coulisseau d'outil (22) et le coulisseau d'équilibrage (42) pouvant être bloqués simultanément au moyen du dispositif de serrage.

2. Outil de tournage de précision selon la revendication 1, **caractérisé en ce que** sur le coulisseau d'outil (22) est agencée une échelle graduée (78) pouvant être lue sans contact par le système de mesure de déplacement (72).

3. Outil de tournage de précision selon la revendication 1 ou la revendication 2, **caractérisé en ce que** l'élément de transmission de force (90) forme un élément d'arrêt de sécurité bloquant le coulisseau d'outil (22) à l'encontre d'une rotation autour de l'axe de réglage (24).

4. Outil de tournage de précision selon la revendication 1, 2 ou la revendication 3, **caractérisé en ce que** l'élément de transmission de force (90) est maintenu réglable dans le corps d'outil (12).

5. Outil de tournage de précision selon l'une des revendications précédentes, **caractérisé en ce que** l'élément de transmission de force (90) est maintenu avec jeu dans le corps d'outil (12), le jeu pouvant être réglé au moyen d'un élément d'ajustage (110).

6. Outil de tournage de précision selon l'une des revendications précédentes, **caractérisé en ce que** l'élément de transmission de force est réalisé en tant que pièce en coin (90), qui s'appuie avec une surface de coin (92), de manière plane, contre le coulisseau d' outil (22).

7. Outil de tournage de précision selon l'une des revendications précédentes, **caractérisé en ce que** le dispositif de serrage présente une broche de serrage (94), qui peut être sollicitée avec une force de serrage par l'organe de serrage (102), la broche de serrage exerçant, dans un premier tronçon longitudinal (96), une force de serrage sur l'élément de transmission de force (90), et exerçant, dans un deuxième tronçon longitudinal (100), une force de serrage sur le coulisseau d'équilibrage (42).

8. Outil de tournage de précision selon la revendication 7, **caractérisé en ce que** la broche de serrage (94), dans son premier tronçon longitudinal (96), s'appuie directement contre l'élément de transmission de force (90).

9. Outil de tournage de précision selon la revendication 7 ou la revendication 8, **caractérisé en ce que** la broche de serrage (94), dans son deuxième tronçon longitudinal (100), s'appuie directement contre le coulisseau d'équilibrage (42).

10. Outil de tournage de précision selon l'une des revendications précédentes, **caractérisé en ce que** le dispositif d'alimentation en énergie (80) est agencé dans un logement de pile (82) du corps d'outil (12), qui peut être fermé de manière étanche aux liquides.

11. Outil de tournage de précision selon la revendication 10, **caractérisé en ce que** le corps d'outil (12) comporte une queue d'outil (14) pour la liaison fixe en rotation avec la broche d'une machine-outil, et **en ce que** le logement de pile (82) est accessible sur le côté frontal (18) du corps d'outil (12), qui est opposé à celui où se trouve la queue d'outil (14).

12. Outil de tournage de précision selon l'une des revendications précédentes, **caractérisé en ce que** le coulisseau d'équilibrage (42) est maintenu coulissant sur une broche de guidage (46), qui traverse un évidement (40) du corps d'outil (12).

13. Outil de tournage de précision selon la revendication 12, **caractérisé en ce que** l'évidement (40) forme un passage traversant du corps d'outil (12), qui est fermé à ses deux extrémités, respectivement par un couvercle (48, 50) correspondant, la broche de guidage (46) reliant les couvercles (48, 50) l'un à l'autre.
